# EUROPEAN PATENT APPLICATION

(11) **EP 1 187 275 A2**
(43) Date of publication of application: **13.03.2002**
(21) Application number: 01121189.3
(22) Date of filing: 04.09.2001
(51) Int. Cl.: H01S 3/13

(54) **Gain control device and method for erbium doped fiber amplifier**

(30) Priority: 06.09.2000 KR 2000052684
(71) Applicant: SAMSUNG ELECTRONICS CO., LTD., Suwon-City, Kyungki-do (KR)
(72) Inventor: Park, Tae-Sung, Samsung Electronics Co., Ltd., Suwon-city, Kyungki-do (KR); Choi, Do-In, Samsung Electronics Co., Ltd., Suwon-city, Kyungki-do (KR); Oh, Yun-Je, Samsung Electronics Co., Ltd., Suwon-city, Kyungki-do (KR)
(74) Representative: Grünecker, Kinkeldey, Stockmair & Schwanhäusser Anwaltssozietät

(57) **Abstract**

A gain control device and method for an erbium doped fiber amplifier, which is suitable for a wavelength division multiplexing system while being capable of coping with diverse intensities of optical signals. The gain control device includes a pumping light source for outputting pumping light adapted to excite erbium ions for amplification of an input optical signal while outputting a pumping light sensing signal indicative of the power of the pumping light, a photo-detecting unit for outputting an input light sensing signal indicative of the power of the input optical signal, a control unit for reading out, from a look-up table, a reference power corresponding to the optical signal power indicated by the input light sensing signal, and outputting a reference signal indicative of the read-out reference power, an automatic gain control circuit for conducting a comparison between the reference power and the pumping light power, based on the pumping light sensing signal and the reference signal, and outputting a power compensating signal adapted to compensate for a difference between the reference power and the pumping light power, and a pumping light source driving unit for controlling the level of a bias current supplied to the pumping light source, based on the power compensating signal.

## Description

The present invention relates to an erbium doped fiber amplifier, and more particularly to a gain control device and method for an erbium doped fiber amplifier.

In erbium doped fiber amplifiers, there may be problems associated with gain flatness and noise figure among channels. In order to solve such problems, a gain control device is required which serves to automatically maintain a desired gain among channels in spite of variations in the number of input channels and the intensity of input light. Although gain control using optical elements is effective in an erbium doped fiber amplifier, this involves a problem in that it is difficult to tune operating parameters due to a complexity in the structure of the erbium doped fiber amplifier and a variation in condition depending the position of the erbium doped fiber amplifier. On the contrary, adjustment of pumping light may be easily implemented in accordance with control of bias current supplied to a source of the pumping light. However, where this method is applied to a wavelength division multiplexing system in which the number of channels in an optical signal may be variable, there is a problem in that it is difficult to control the intensity of pumping light, based on the intensity of the optical signal having variable characteristics, by use of a simple analog circuit. Furthermore, there is a difficulty in that the device implementing the above mentioned gain control should have a function to suppress a temporal transient phenomenon occurring in an output optical signal due to an increase/decrease in the number of channels.

It is, therefore, the object of the present invention to provide a gain control device and method for an erbium doped fiber amplifier, which is suitable for a wavelength division multiplexing system while being capable of coping with diverse intensities of optical signals.

According to an aspect of the present invention, there is provided a gain control device and method for an erbium doped fiber amplifier, which is capable of suppressing a temporal transient phenomenon occurring in an output optical signal.

In accordance with another aspect, the present invention provides a gain control device for an erbium doped fiber amplifier adapted to amplify an input optical signal in accordance with an induced discharge of erbium ions, comprising:
a pumping light source for outputting pumping light adapted to excite the erbium ions while detecting a part of the pumping light, thereby outputting a pumping light sensing signal indicative of the power of the pumping light;
a photo-detecting unit for partially detecting the optical signal inputted to the erbium doped fiber amplifier, thereby outputting an input light sensing signal indicative of the power of the input optical signal;
a control unit for reading out, from a look-up table, a reference power corresponding to the optical signal power indicated by the input light sensing signal, and outputting a reference signal indicative of the read-out reference power;
an automatic gain control circuit for conducting a comparison between the reference power and the pumping light power, based on the pumping light sensing signal and the reference signal, and outputting a power compensating signal adapted to compensate for a difference between the reference power and the pumping light power; and
a pumping light source driving unit for controlling the level of a bias current supplied to the pumping light source, based on the power compensating signal.

In accordance with still another aspect, the present invention provides a gain control method for an erbium doped fiber amplifier adapted to amplify an input optical signal in accordance with an induced discharge of erbium ions, the erbium doped fiber amplifier including a pumping light source for outputting pumping light adapted to excite the erbium ions, and a pumping light source driving unit for applying a bias current to the pumping light source, comprising the steps of:
deriving the number of channels in the optical signal inputted to the erbium doped fiber amplifier, from a power of the input optical signal;
if the derived channel number is different from a reference number of channels, then outputting, to the pumping light source unit, a temporal transient suppressing signal adapted to compensate for the difference between the derived channel number and the reference channel number;
reading out, from a look-up table, a reference power corresponding to the power of the input optical signal;
comparing a power of the pumping light with the read-out reference power, thereby deriving a difference between the pumping light power and the reference power; and
outputting, to the pumping light source driving unit, a power compensating signal adapted to compensate for the power difference.

The above object and advantages of the present invention will become more apparent by describing in detail preferred embodiments thereof with reference to the attached drawings in which:
Fig. 1 is a block diagram illustrating a gain control device for an erbium doped fiber amplifier according to a preferred embodiment of the present invention;
Fig. 2 is a graph illustrating data to be stored in a look-up table shown in Fig. 1;
Fig. 3 illustrates graphs respectively indicating operations of the gain control device shown in Fig. 1; and
Fig. 4 is a flow chart illustrating a gain control method for an erbium doped fiber amplifier according to a preferred embodiment of the present invention.

Now, preferred embodiments of the present invention will be described in detail, with reference to the annexed drawings. In the following description, a variety of specific elements such as constituent elements are described. The description of such elements has been made only for a better understanding of the present invention. Those skilled in the art will appreciate that various modifications, additions, and substitutions to the specific elements are possible.

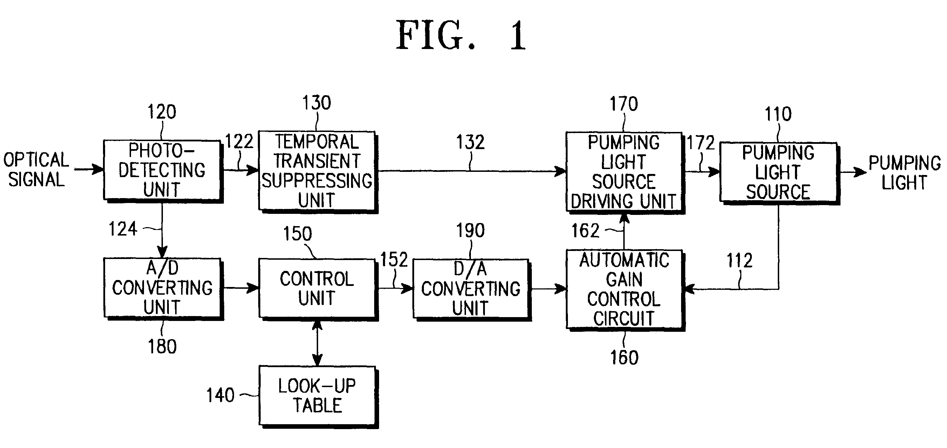

Fig. 1 is a block diagram illustrating a gain control device for an erbium doped fiber amplifier according to a preferred embodiment of the present invention. As shown in Fig. 1, the gain control device includes a pumping light source 110, a photo-detecting unit 120, a temporal transient suppressing unit 130, a look-up table 140, a control unit 150, an automatic gain control circuit 160, a pumping light source driving unit 170, an analog/digital (A/D) converting unit 180, and a digital/analog (D/A) converting unit 190.

The pumping light source 110 outputs pumping light adapted to excite erbium ions while detecting a part of the pumping light, thereby outputting a pumping light sensing signal 112 indicative of the power of the pumping light. The pumping light source 110 may include a laser diode for outputting pumping light, a beam splitter for transmitting a part of the pumping light while reflecting the remaining part of the pumping light, and a photodiode for detecting the intensity of the reflected light.

The photo-detecting unit 120 partially detects an optical signal inputted to the erbium doped fiber amplifier, thereby outputting input light sensing signals 122 and 124 each indicative of the power of the input optical signal. The photo-detecting unit 120 may include a beam splitter for transmitting a part of the input optical signal while reflecting the remaining part of the input optical signal, and a photodiode for detecting the intensity of the reflected light.

The temporal transient suppressing unit 130 calculates the number of channels in the optical signal, based on the input light sensing signal 122. When the calculated number of channels is different from a predetermined reference number of channels, the temporal transient suppressing unit 130 outputs a temporal transient suppressing signal 132 to compensate for the difference in the number of channels.

The analog/digital converting unit 180 converts the input light sensing signal 124 into a digital signal.

The look-up table 140 stores linear data about diverse power values of optical signals inputable to the erbium doped fiber amplifier. That is, the look-up table 140 stores data about power values of pumping light along a line extending between maximum and minimum power values of pumping light respectively corresponding to maximum and minimum power values of optical signals inputable to the erbium doped fiber amplifier.

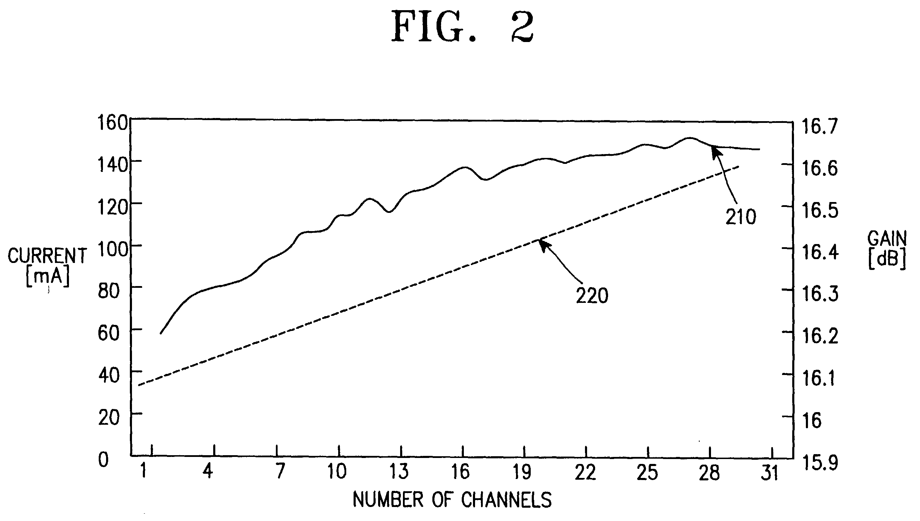

Fig. 2 is a graph illustrating data to be stored in the look-up table 140. Referring to Fig. 2, the number of channels in an input optical signal and the gain of the erbium doped fiber amplifier depending on a bias current 172 supplied to the pumping light source 110 are indicated. In Fig. 2, the solid line 210 represents a graph indicative of the characteristics of the pumping light source 110 or erbium doped fiber amplifier whereas the phantom line 220 represents a graph indicative of data stored in the look-up table 140. Referring to Fig. 2, it can be seen that the characteristic graph of the pumping light source 110 or erbium doped fiber amplifier has a gradient gently increasing in accordance with an increased level of the bias current 172 without any remarkable fluctuation. Taking this fact into consideration, the characteristic graph of the pumping light source 110 or erbium doped fiber amplifier approximates a linear graph in accordance with the present invention.

The control unit 150 reads out, from the look-up table 140, a reference power corresponding to the optical signal power indicated by the input light sensing signal, and outputs a reference signal 152 indicative of the read-out reference power.

The D/A converting unit 190 converts the reference signal 152 into an analog signal.

The automatic gain control circuit 160 conducts a comparison between the reference power and pumping light power, based on the pumping light sensing signal 112 and reference signal 152, and outputs a power compensating signal 162 for compensating for a difference between the reference power and pumping light power. That is, the automatic gain control circuit 160 compensates for an error of the pumping light power from the reference power in a feed-back fashion, that is, in such a fashion that the present power from the pumping light source 110 has influence on power from the pumping light source 110 following the present power.

The pumping light source driving unit 170 controls the level of the bias current 172 supplied to the pumping light source 110, based on the power compensating signal 162.

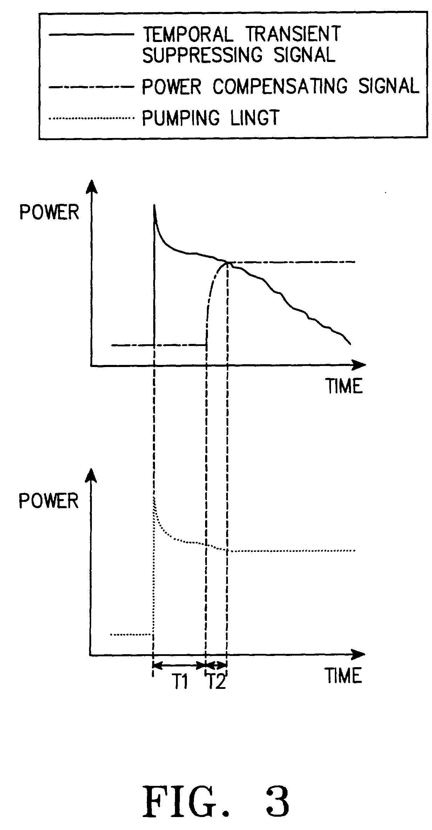

Fig. 3 illustrates graphs respectively indicating operations of the gain control device shown in Fig. 1. The upper graph of Fig. 3 shows the temporal transient suppressing signal 132 and power compensating signal 162 generated when an increase in the number of channels in the input optical signal occurs. Referring to this graph, it can be seen that the temporal transient suppressing signal 132 is outputted simultaneously with the point of time when an increase in the number of channels is sensed whereas the power compensating signal 162 is outputted later than the temporal transient suppressing signal 132 due to a time delay T1 occurring during the operation of the control unit 150 and a time delay T2 resulting from the setting of the automatic gain control circuit 160. The lower graph of Fig. 3 shows a variation in the power of the pumping light occurring in response to the temporal transient suppressing signal 132 and power compensating signal 162. Referring to this graph, it can be seen that the power of the pumping light responds to the temporal transient suppressing signal 132 without any delay, so that it increases sharply, simultaneously with an increase in the number of channels. Following this increase, the power of the pumping light decreases gradually, and is then stabilized in accordance with the power compensating signal 162 subsequently generated. That is, the temporal transient suppressing signal 132 serves to suppress a temporal transient phenomenon occurring in the output from the erbium doped optical fiber amplifier due to an increase or decrease in the number of channels in the input optical signal. Also, the power compensating signal 162 serves to stabilize the output from the erbium doped fiber amplifier.

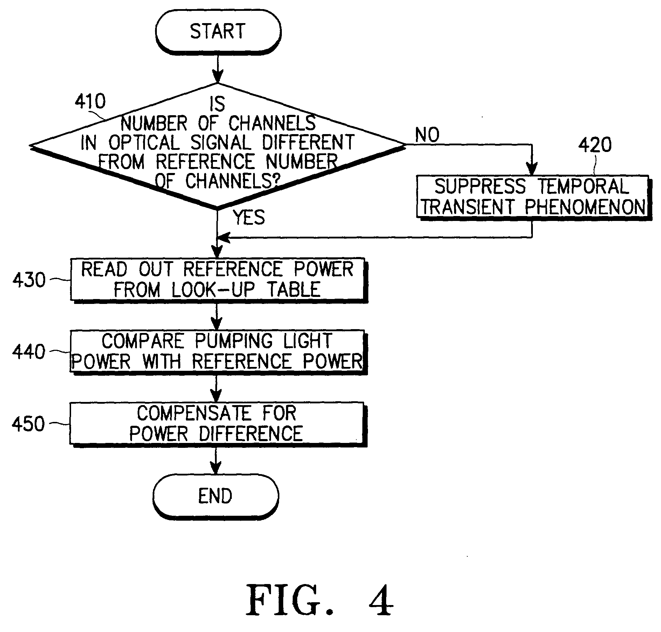

Fig. 4 is a flow chart illustrating a gain control method for the erbium doped fiber amplifier according to a preferred embodiment of the present invention. As shown in Fig. 4, the gain control method involves a channel number comparing step 410, a temporal transient phenomenon suppressing step 420, a reference power reading-out step 430, and a reference power/pumping light power comparing step 440, and a power difference compensating step 450.

The channel number comparing step 410 is a step of deriving the number of channels in an optical signal inputted to the erbium doped fiber amplifier, from the power of the input optical signal, and comparing the derived number of channels with a predetermined reference channel number.

Where the derived channel number is different from the reference channel number, a temporal transient suppressing signal is applied to the pumping light source driving unit in the temporal transient phenomenon suppressing step 420, in order to compensate for the difference between the derived channel number and the reference channel number. In response to the temporal transient suppressing signal, the pumping light source driving unit controls the level of the bias current supplied to the pumping light source. That is, the pumping light source driving unit increases the level of the bias current when the number of channels in the input optical signal is more than the reference channel number, while decreasing the level of the bias current when the number of channels in the input optical signal is less than the reference channel number.

The reference power reading-out step 430 is a step of reading out, from a look-up table storing linear data about diverse power values of optical signals, the reference power corresponding to the power of the input optical signal. The data stored in the look-up table is linear data about power values of pumping light along a line extending between maximum and minimum power values of pumping light respectively corresponding to maximum and minimum power values of optical signals inputable to the erbium doped fiber amplifier.

The reference power/pumping light power comparing step 440 is a step of comparing the power of the pumping light outputted from the pumping light source with the read-out reference power, thereby deriving a difference between those powers.

The power difference compensating step 450 is a step of outputting, to the pumping light source driving unit, a power compensating signal adapted to compensate for the power difference. In accordance with the execution of this power difference compensating step 450, the power of the pumping light is stabilized to have a constant power level.

As apparent from the above description, the gain control device and method for the erbium doped fiber amplifier according to the present invention have an advantage in that they allow the erbium doped fiber amplifier to cope with diverse intensities of optical fibers by use of a look-up table.

Also, the gain control device and method for the erbium doped fiber amplifier according to the present invention have an advantage in that it is possible to suppress a temporal transient phenomenon occurring in the output from the erbium doped fiber amplifier, using a temporary transient suppressing signal.

## Claims

1. A gain control device for an erbium doped fiber amplifier adapted to amplify an input optical signal in accordance with an induced discharge of erbium ions, comprising:
a pumping light source for outputting pumping light adapted to excite the erbium ions while detecting a part of the pumping light, thereby further outputting a pumping light sensing signal indicative of the power of the pumping light;
a photo-detecting unit for partially detecting the optical signal inputted to the erbium doped fiber amplifier, thereby outputting an input light sensing signal indicative of the power of the input optical signal;
a control unit for reading out, from a look-up table, a reference power corresponding to the optical signal power indicated by the input light sensing signal, and for outputting a reference signal indicative of the read-out reference power;
an automatic gain control circuit for conducting a comparison between the reference power and the pumping light power, based on the pumping light sensing signal and the reference signal, and for outputting a power compensating signal adapted to compensate for a difference between the reference power and the pumping light power; and
a pumping light source driving unit for controlling the level of a bias current supplied to the pumping light source, based on the power compensating signal.

2. The gain control device according to claim 1, further comprising:
a temporal transient suppressing unit for calculating the number of channels in the optical signal, based on the input light sensing signal, and if the calculated number of channels is different from a predetermined reference number of channels, for outputting a temporal transient suppressing signal adapted to compensate for the difference in the number of channels.

3. The gain control device according to claim 1 or 2, further comprising:
an analog/digital converting unit for converting the input light sensing signal into a digital signal, and outputting the digital signal to the control unit; and
a digital/analog converting unit for converting the reference signal into an analog signal, and for outputting the analog signal to the automatic gain control circuit.

4. The gain control device according to one of the claims 1 to 3, wherein the look-up table stores data about power values of pumping light along a line extending between maximum and minimum power values of pumping light respectively corresponding to maximum and minimum power values of the optical signal.

5. A gain control method for an erbium doped fiber amplifier adapted to amplify an input optical signal in accordance with an induced discharge of erbium ions, the erbium doped fiber amplifier including a pumping light source for outputting pumping light adapted to excite the erbium ions, and a pumping light source driving unit for applying a bias current to the pumping light source, comprising the steps of:
deriving the number of channels in the optical signal inputted to the erbium doped fiber amplifier, from a power of the input optical signal;
if the derived channel number is different from a reference number of channels, outputting, to the pumping light source unit, a temporal transient suppressing signal adapted to compensate for the difference between the derived channel number and the reference channel number;
reading out, from a look-up table, a reference power corresponding to the power of the input optical signal;
comparing a power of the pumping light with the read-out reference power;
deriving a difference between the pumping light power and the reference power; and
outputting, to the pumping light source driving unit, a power compensating signal adapted to compensate for the power difference.
